# EUROPEAN PATENT APPLICATION

(11) **EP 1 721 875 A2**
(43) Date of publication of application: **15.11.2006**
(21) Application number: 06113662.8
(22) Date of filing: 09.05.2006
(51) Int. Cl.: C04B 24/26, C04B 28/02, B28B 11/00

(54) **Use of a salt of a poly-acid to delay setting in cement slurry**

(30) Priority: 13.05.2005 US 128479
(71) Applicant: Hewlett-Packard Development Company, L.P., Houston, TX 77070 (US)
(72) Inventor: Farr, Isaac, Corvallis, OR 97330-4239 (US); Kearl, Daniel A, Corvallis, OR 97330-4239 (US); Carty, William, Alfred, NY 14802 (US); Kim, Ungsoo, Alfred, NY 14802 (US); Lee, Hyojin, Alfred, NY 14802 (US)
(74) Representative: Lawman, Matthew John Mitchell

(57) **Abstract**

A spray-dryable cement composition comprises unreacted cement particles and a salt of a poly-acid. The composition can be used in a method for solid free-form fabrication of a three-dimensional object, in which a slurry comprising unreacted cement particles and a poly acid in a liquid carrier is spraydried so as to substantially remove the carrier and form dry cement particles, the cement particles are deposited in a defined region and a liquid binder is applied to a predetermined area within the defined region such that upon contact of the liquid binder with the cement particles a hydrated cement forms in the predetermined area, and the steps of depositing the cement and applying the binder are repeated so as to form a three dimensional object.

## Description

### BACKGROUND

The efficient production of prototype or other three-dimensional objects can provide an effective means of reducing the time it takes to bring a product to market at a reasonable cost. Conventional approaches for preparing prototypes have required machining either the prototype itself or specific tooling, e.g., molds and dies, for forming the prototype. Thus, construction of a prototype can be a slow and cumbersome process.

Recently, computerized modeling has alleviated some of the need for building prototypes. Computer modeling can be carried out quickly, and provide a good idea of what a product will look like, without a specialized tooling requirement. However, the fabrication of a tangible object is still often preferred for prototyping. The merging of computer modeling and the physical formation of three-dimensional objects is sometimes referred to as desktop manufacturing. Various techniques that employ desktop manufacturing have been explored and described in the literature.

In this evolving area of technology, there has been a desire to provide new methods of manufacture that are relatively easy to employ, provide rigid structures, and are able to form three-dimensional objects relatively quickly. One such method involves the steps of depositing a particulate cement composition in a defined region; ink-jetting a liquid binder onto a predetermined area of the particulate composition to form hydrated cement in the predetermined area; hardening the hydrated cement; and repeating these steps such that a monolithic object having the desired three dimensional shape is formed.

It has been found, however, that the particulate layers cannot be rapidly deployed with the desired level of control and uniformity unless the cement particles themselves are sufficiently uniform and flowable. It has been further found that non-spherical particles having a large size range, such as are generated by conventional processes tend to clump and resist flowing in a controlled, even manner.

Thus, additional methods, systems, and/or compositions that provide improved cement particles would be an advancement in the art.

### BRIEF SUMMARY

The problems noted above are solved in large part by spray-drying cement particles from a slurry. Undesired early reaction of the cement particles during mixing and spray drying is prevented by maintaining the pH of the slurry above a predetermined level. In some embodiments this is achieved by using a salt of a poly-acid in the slurry. The salt dissociates without decreasing the pH and so does not cause the accelerated setting that would otherwise occur. In this manner, a spray-dryable cement composition comprising unreacted cement particles and a salt of a poly-acid is formed.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...."

The use of the term "cement," in accordance with embodiments of the present invention, is intended to include in particular hydrated compositions that contain inorganic phosphates and in general particulate compositions that react in the presence of water to form a solid. The cement can be in a wet state, or in a hardened or cured state.

The term "dry cement particles" is used to describe dry particulate compositions that can be hydrated to form cement.

The term "particulate" includes fine dry powders and/or crystals.

The term "colorant" includes both pigments and dyes.

The terms "harden" or "hardening" includes a state of cement setting from the beginning stages of setting to a completely hardened or cured state.

As used herein, "liquid binder" refers to a liquid that will react with dry cement particles to form a cement and can be prepared for jetting from ink-jet architecture.

As used herein, "poly-acid" refers to a polymer having at least one acid functionality.

The term "predetermined area," is used herein in the context of layering of cement in incremental cross-sections so as to form a three-dimensional object. The predetermined area is a cross-section of the desired object and can vary from layer to layer. The shape of the predetermined area of each layer of cement is defined such that upon completion of all layers a three-dimensional object having the desired shape is formed.

The term "slurry" or "cement slurry" is used herein to refer to a spray-dryable mixture comprising at least cement particles in a liquid carrier.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

The present specification describes a cement composition that is well-suited for use in freeform fabrication systems. The particulate portion of the cement is free-flowing and uniform and may include inorganic phosphate cement particles. The liquid portion of the cement is compatible with inkjet systems such as, in a non-limiting example, drop-on-demand systems and can be used in freeform fabrication systems that incorporate an inkjet print head.

It has been found that the quality of objects formed using freeform fabrication systems is lacking when conventional dry calcium phosphate cement particles are used, inasmuch as the particles tend to be non-uniform and to clump such that it is difficult to quickly and effectively deploy a uniform layer onto the object being formed. It has been found that these problems can be mitigated by using a spray-dried cement, as the dry cement particles formed by spray-drying are generally spherical and tend to be uniform in size.

It has further been found, however, that certain reagents that are useful in the cementing reaction tend to impair the spray-drying process. For example, poly-acids having functionality greater than two are often included in cement formulations. By way of specific example, poly(acrylic acid) (PAA), which is desirable because of its ability to facilitate the setting reactions of phosphate cements, reduces the pH of the slurry, causing it to set rapidly, which in turn prevents spray-drying.

It has been found that this undesirable early setting of the slurry can be reduced or prevented by providing the poly-acid to the spray-drying slurry as a salt. Because it is not in its protonated form, the dissociation of the poly-acid in the slurry does not reduce the pH of the slurry. In turn, the cement particles in the slurry remain unreacted during mixing and retain their functionality after spray-drying is complete. In certain embodiments, the poly-acid salt is a sodium or ammonium salt. In other embodiments, suitable salts of the poly-acid can be formed with any monovalent cation.

Alternatively, setting of the cement slurry can be avoided by using an additional base or buffer to maintain the pH of the slurry above a minimum level. It is believed that in most instances, maintaining the pH of the slurry above 6 will suffice to prevent setting. Examples of suitable bases include but are not limited to ammonia, calcium hydroxide, and sodium hydroxide. Further examples of suitable bases include but are not limited to piperazine-1,4-bis(2-ethanesulfonic acid) (PIPES), tris(hydroxymethyl) aminomethane, ammonia, borate, and diethylamine.

Spray-drying of the slurry may be carried out using conventional spray drying nozzles, pressures and orifice sizes. It has been found that providing a dryer gas stream heated to between about 200°C and 350°C and maintaining a spray-drying outlet temperature between about 50°C and 150°C ensures adequate flowability and drying of the slurry, but it will be understood that any suitable spray drying conditions may be used. The resulting dry cement particles flow well and can readily be deployed in a uniform layer as part of a freeforming process.

In the free forming process, layers of spray-dried particles can be applied to a desired platform or substrate alternately with applications of liquid binder so as to build up a three-dimensional object have a desired shape. The liquid binder can be applied in a predetermined area using inkjet systems such as, by way of example only, drop-on-demand systems.

### Dry Cement Particles

The present invention can be used in conjunction with any cement formulation that includes a poly-acid. Inorganic cements including but not limited to calcium phosphates and calcium sulfate cements can benefit from the present invention, as can hydraulic cements and the like.

If inorganic phosphate cement particles are used, they can be present in the particulate composition at from 20 wt % to 100 wt % and can have an average particulate size from 0.1 microns to 1000 microns. In certain embodiments, the particulate cement composition can comprise one or more calcium phosphate compounds. Examples include monocalcium phosphate, dicalcium phosphate, tricalcium phosphate, tetracalcium phosphate, or hydroxyapatite. Other phosphates including magnesium phosphate, strontium phosphate, barium phosphate, or alkali metal phosphates can alternatively or additionally be used in various formulations as well. Addition of one or more of these alternative phosphates (particularly strontium and barium) can enable detection or tracking by radiographic means, should such be desired.

In some embodiments, it may be desirable to include one or more active pharmaceutical ingredients, also referred to as bioactive agents, such as antibacterial, antitumor, analgesic, or immunosuppressive agents in the cement. In these cases, the bioactive agent can be added to the slurry before spray-drying, to the spray-dried particles before or after they are deployed, or to the liquid binder.

In addition to the afore-mentioned additives, other particulate components may also be present in the particulate composition, such as ordinary Portland dry cement mix, ferrite dry cement mix, sulfoferrite, sulfoaluminoferrite, nanofillers, plasticizers, crosslinking agents, polymers, and drying and setting accelerators.

In some embodiments, polymeric particulates can also be present in the particulate composition. Examples of such polymeric particulates include 75% to 100% hydrolyzed polyvinyl alcohol powder, polyacrylamide powder, poly(acrylic acid), poly(acrylamide-co-acrylic acid), poly(vinyl alcohol-co-ethylene), poly(vinyl alcohol-co-vinyl acetate-co-itaconic acid), poly(vinyl pyrrolidone), poly(methylmethacrylate-co-methacrylic acid), soluble starch, methylcellulose, and combinations thereof. The weight average molecular weight of such polymeric particulates can be from 2,000 Mw to 1,000,000 Mw. In a more detailed aspect, the polymeric particulates can be from 2,000 Mw to 150,000 Mw. The polymeric particulates can have an average particulate size from 5 microns to 80 microns. The use of the polymeric particulates can provide for crosslinking or other reactions within the particulate composition upon application of the aqueous liquid, thereby improving hardening and strength-building of the three-dimensional object.

### Liquid Portion

The liquid portion of the cement can be any liquid that will react with the spray-dried cement particles and can be prepared for jetting from ink-jet architecture. In many embodiments, water will be a primary component of the liquid binder. Other compounds that can be present in a liquid binder are well known in the ink-jet arts, and a wide variety of such components can be used with the systems and methods of the present invention. These other compounds may be present to alter the pH, improve jettability properties, alter the properties of the resulting object (such as strength), alter the hardening properties of the cement (such as hardening accelerators), and the like. Examples of such added components include a variety of different agents, including surfactants, organic solvents and co-solvents, buffers, biocides, sequestering agents, viscosity modifiers, low molecular weight polymers, lithium ion sources, etc. Colorant can optionally be added to the aqueous liquid as well.

In certain embodiments, the liquid binder may include a dilute acid, such as phosphoric acid, which promotes setting by decreasing the pH of the wet cement. In some of these embodiments, the acid in the binder may be sufficient to reduce the pH of the cement below 6.

### Example

The example that follows is intended to illustrate but not limit the present invention.

To prepare a batch of slurry, 1000 g of tetracalcium phosphate (TTCP) cement particles were pre-milled in water for 30 minutes using a vibratory mill. The pH of the slurring during pre-milling was ~12.0. At the end of the milling, the cement particles had a specific surface area of 5.5 m²/g and an average size between 10 and 12 • m. 138.9 g lithium phosphate and 41.7 g magnesium fluoride were added to the pre-milled suspension, causing the pH to drop to ~11.6. The suspension was then milled for an additional 30 minutes, after which the surface area was 10.6 m²/g and the average size between 10 and 11 • m. 138.9 g NH₄-PAA (Darvan 821 A) in aqueous solution (43 wt %) and 69.4 g citric acid were added to the slurry, causing the pH to drop to ~6.5. Lithium hydroxide was added to adjust the pH to ~7.0 and the resulting mixture was mixed for one hour using an impeller mixer. Following mixing, the slurry was spray-dried, using an inlet temperature of 300°C and an outlet temperature of 95°C. SEM images of the resulting spray-dried particles showed generally spherical shapes.

The above discussion is meant to be illustrative of the principles and various embodiments of the present invention. Numerous variations and modifications will become apparent to those skilled in the art once the above disclosure is fully appreciated. Likewise, the sequential recitation of steps in a claim is not intended as a requirement that the steps be performed sequentially, nor that a particular step be commenced before another step is completed. It is intended that the following claims be interpreted to embrace all such variations and modifications.

## Claims

1. A spray-dryable cement composition, comprising:
unreacted cement particles; and
a salt of a poly-acid.

2. The composition of claim 1 wherein the salt is a sodium or ammonium salt.

3. The composition of claim 1 wherein the poly-acid is poly(acrylic acid).

4. A method for making a spray-dried cement composition, comprising:
a) providing unreacted cement particles in a liquid carrier;
b) adding a poly-acid to said particles so as to form a slurry, while maintaining the pH of the slurry above about 6;
c) spray-drying the slurry.

5. The method of claim 4 wherein the poly-acid is poly(acrylic acid) and the pH of the slurry is maintained by adding the poly-acid as a salt.

6. The composition of claim 1 or 4 wherein the cement composition further includes an active pharmaceutical ingredient.

7. A method for free-form fabrication of a three-dimensional object, comprising:
a) providing a slurry comprising unreacted cement particles and a poly acid in a liquid carrier and maintaining the pH of said slurry above 6;
b) spray-drying the slurry so as to substantially remove the carrier and form dry cement particles;
c) depositing the cement particles in a defined region;
d) ink-jetting a liquid binder onto a predetermined area within the defined region such that upon contact of the liquid binder with the cement particles a hydrated cement forms in the predetermined area;
e) repeating steps c) through d) such that multiple layers of the cement are formed that are bound to one another, thereby forming the three dimensional object.

8. The method of claim 7 wherein the pH of the slurry is maintained by forming said slurry from a salt of poly(acrylic acid).

9. The method of claim 4 or 7 wherein the pH of the slurry is maintained by adding a base or a buffer to said slurry.

10. The method of claim 7 wherein the liquid binder includes an active pharmaceutical ingredient.
